# EUROPEAN PATENT APPLICATION

(11) **EP 4 481 085 A1**
(43) Date of publication of application: **25.12.2024**
(21) Application number: 22935722.3
(22) Date of filing: 16.12.2022
(51) Int. Cl.: C23C 22/00, C21D 8/12, C21D 9/46, C22C 38/00, C22C 38/60, C23C 22/78, C23G 1/08, H01F 1/18

(54) **PRE-TREATMENT LIQUID AND METHOD FOR MANUFACTURING ELECTROMAGNETIC STEEL SHEET PROVIDED WITH INSULATING FILM**

(30) Priority: 30.03.2022 JP 2022054897
(71) Applicant: JFE Steel Corporation, Tokyo 100-0011 (JP)
(72) Inventor: TERASHIMA, Takashi, Tokyo 100-0011 (JP); KOKUFU, Karin, Tokyo 100-0011 (JP)
(74) Representative: Grünecker Patent- und Rechtsanwälte PartG mbB
(86) International application number: PCT/JP2022/046441
(87) International publication number: WO 2023/188594

(57) **Abstract**

Obtained is an electrical steel sheet provided with an insulating coating which is excellent in adhesion of a forsterite coating and has a low iron loss. Therefore, provided is a pre-treatment liquid used on an electrical steel sheet having a forsterite coating on a surface thereof before applying an insulating coating treatment liquid containing at least one salt selected from the group consisting of phosphate, borate, and silicate, the pre-treatment liquid. The pre-treatment liquid includes: at least one inorganic acid selected from the group consisting of hydrochloric acid, sulfuric acid, and phosphoric acid; and acetic acid, wherein a content of the acetic acid is not less than 1 mass ppm and not more than 3000 mass ppm.

## Description

### TECNICAL FIELD

The present invention relates to a pre-treatment liquid and a method for manufacturing an electrical steel sheet provided with an insulating coating.

### BACKGROUND ART

In general, an electrical steel sheet has, on its surface, a coating that imparts characteristics such as insulation properties, seizure resistance, and rust prevention properties. For example, a grain oriented electrical steel sheet has a forsterite-containing coating (forsterite coating) formed on the surface of the steel sheet during finishing annealing, and an insulating coating formed thereon (Patent Literature 1).

An insulating coating used for the grain oriented electrical steel sheet is formed by applying an insulating coating treatment liquid containing a salt such as a phosphate onto the forsterite coating and baking the treatment liquid at a high temperature.

This insulating coating has a lower coefficient of thermal expansion than the steel sheet. Therefore, when the temperature is lowered to room temperature after baking, tension is applied to the steel sheet by the insulating coating, and iron loss is reduced.

While the forsterite coating is formed on the surface of the steel sheet during finishing annealing as described above, at this time, an impurity element in the steel sheet may be incorporated into the forsterite coating in some cases. Examples of the impurity element include sulfur (S) and selenium (Se).

In this state, when baking (or flattening annealing also serving as baking) is performed to form an insulating coating, the impurity element enters from the forsterite coating into the steel sheet again.

As a result, the magnetic properties of the resulting electrical steel sheet provided with an insulating coating may deteriorate, and for example, the iron loss may increase in some cases.

Therefore, Patent Document 1 describes that a forsterite coating is subjected to a pre-treatment of phosphoric acid pickling (phosphoric acid pickling pre-treatment) before applying an insulating coating treatment liquid.

Patent Literature 1 describes that, when the phosphoric acid pickling pre-treatment is performed, S, which is an impurity element incorporated into the forsterite coating, is removed, and re-entering of S into the steel sheet is suppressed.

### CITATION LIST

### PATENT LITERATURES

Patent Literature 1: JP 09-321486 A

### SUMMARY OF INVENTION

### TECHNICAL PROBLEMS

In recent years, from the viewpoint of meeting the increasing needs for low iron loss, there is a remarkable requirement for thinning a steel sheet in order to reduce eddy current loss. Thinning causes a decrease in productivity that is expressed by production volume per hour. On the other hand, the demand for grain oriented electrical steel sheets is increasing due to an increase in the demand for electric power.

Therefore, speed-up of production lines is studied, but the pre-treatment time decreases due to the speed-up.

When the pre-treatment time is short, removal of an impurity element from a forsterite coating may be insufficient. In this case, during annealing (or flattening annealing), re-entering of the impurity element from the forsterite coating into the steel sheet is not suppressed, and the resulting electrical steel sheet provided with an insulating coating has a high iron loss.

Therefore, increase in temperature of the pre-treatment (pre-treatment temperature) has been studied.

However, in this case, the forsterite coating is damaged by the pre-treatment liquid, and the adhesion of the forsterite coating to the steel sheet tends to decrease. Also in this case, the iron loss increases.

The present invention has been made in view of the above points, and an object thereof is to obtain an electrical steel sheet provided with an insulating coating which is excellent in adhesion of a forsterite coating and has a low iron loss.

### SOLUTION TO PROBLEMS

The present inventors have made an intensive study to achieve the foregoing objects.

As a result, it was found that, by adding a specific amount of acetic acid to a pre-treatment liquid containing an inorganic acid such as phosphoric acid, an impurity element can be sufficiently removed from the forsterite coating even when the pre-treatment time is short. The present invention has been thus completed.

Specifically, the present invention provides the following [1] to [6].
[1] A pre-treatment liquid used on an electrical steel sheet having a forsterite coating on a surface thereof before applying an insulating coating treatment liquid containing at least one salt selected from the group consisting of phosphate, borate, and silicate, the pre-treatment liquid comprising:
   at least one inorganic acid selected from the group consisting of hydrochloric acid, sulfuric acid, and phosphoric acid; and
   acetic acid,
   wherein a content of the acetic acid is not less than 1 mass ppm and not more than 3000 mass ppm.
[2] The pre-treatment liquid according to claim [1], wherein a content of the at least one inorganic acid is not less than 0.20 mass% and not more than 30.00 mass%.
[3] A method for manufacturing an electrical steel sheet provided with an insulating coating, the method comprising: subjecting an electrical steel sheet having a forsterite coating on a surface thereof to a pre-treatment using the pre-treatment liquid according to claim 1 or 2; and subsequently applying and baking an insulating coating treatment liquid containing at least one salt selected from the group consisting of phosphate, borate, and silicate to form an insulating coating.
[4] The method for manufacturing an electrical steel sheet provided with an insulating coating according to [3], wherein the pre-treatment is a treatment of bringing the pre-treatment liquid into contact with the forsterite coating.
[5] The method for manufacturing an electrical steel sheet provided with an insulating coating according to [4], wherein a temperature of the pre-treatment liquid is not lower than 30°C and not higher than 95°C, and
   a contact time between the pre-treatment liquid and the forsterite coating is 1.0 second or longer and 40 seconds or shorter.
[6] The method for manufacturing an electrical steel sheet provided with an insulating coating according to any one of [3] to [5], wherein a content of a chromium compound in the insulating coating treatment liquid is 1.0 part by mass or less in terms of chromium element with respect to 100 parts by mass of the salt.

### ADVANTAGEOUS EFFECTS OF INVENTION

According to the present invention, it is possible to obtain an electrical steel sheet provided with an insulating coating which is excellent in adhesion of a forsterite coating and has a low iron loss.

### DETAILED DESCRIPTION OF THE INVENTION

### <Pre-treatment liquid>

First, a pre-treatment liquid is described.

The pre-treatment liquid is used before an insulating coating treatment liquid to be described later is applied to an electrical steel sheet having a forsterite coating on its surface.

### <<Inorganic acid>>

The pre-treatment liquid contains at least one inorganic acid selected from the group consisting of hydrochloric acid, sulfuric acid, and phosphoric acid.

A pre-treatment is performed in which the pre-treatment liquid as above is brought into contact with a forsterite coating of the electrical steel sheet before applying the insulating coating treatment liquid. This leads to achievement of the following effects.

First, an unnecessary annealing separator (annealing separator that has been applied before finishing annealing and has remained) is removed.

Further, a surface of the forsterite coating is suitably roughened, wettability to the insulating coating treatment liquid to be applied later is improved, and application unevenness and liquid repellency of the insulating coating treatment liquid are prevented.

As a result, the resulting insulating coating has a uniform and beautiful appearance. In addition, the insulating property and the tension applied to the steel sheet are also favorable.

Further, impurity elements (S, Se, etc.) incorporated in the forsterite coating are removed. This suppresses re-entering of the impurity elements into the steel sheet during baking (or flattering annealing also serving as the baking) for forming an insulating coating. In this manner, deterioration of the magnetic characteristics is suppressed, and an electrical steel sheet provided with an insulating coating having a low iron loss is obtained.

From the viewpoint of removing the impurity elements in the forsterite coating, the inorganic acid is preferably phosphoric acid.

The inorganic acid content (total content of hydrochloric acid, sulfuric acid, and phosphoric acid) in the pre-treatment liquid is preferably 0.20 mass% or more, and more preferably 0.50 mass% or more, because the impurity elements in the forsterite coating can be sufficiently removed in a short time.

On the other hand, when the content of the inorganic acid is too large, the forsterite coating is damaged, and the adhesion is likely to deteriorate. For this reason, the inorganic acid content in the pre-treatment liquid is preferably not more than 30.00 mass%, and more preferably not more than 25.00 mass% because the adhesion of the forsterite coating is more excellent.

The hydrochloric acid content is a content expressed in terms of HCl, the sulfuric acid content is a content expressed in terms of H₂SO₄, and the phosphoric acid content is a content expressed in terms of H₃PO₄.

In other words, the hydrochloric acid content, the sulfuric acid content, and the phosphoric acid content in the pre-treatment liquid are determined by quantifying chloride ions (Cl⁻), sulfate ions (SO₄²⁻) and phosphate ions (PO₄³⁻) according to JIS K 0102 and converting them into hydrochloric acid, sulfuric acid, and phosphoric acid, respectively.

### <<Acetic acid>>

The pre-treatment liquid further contains acetic acid (CH₃COOH) in addition to the inorganic acid. This improves the ability of the inorganic acid to remove impurity elements in the forsterite coating.

While the reason why this effect is obtained is not fully understood, it is presumed as follows:
The impurity elements (S, Se) are present as a sulfur compound and/or a selenium compound (hereinafter, also referred to as "impurity compound") in the forsterite coating.

When acetic acid ions (CH₃COO⁻) are adsorbed on a surface of the impurity compound, the dissolution rate of the impurity compound to the inorganic acid is improved.

At this time, when the acetic acid content is too small, the amount of acetic acid adsorbed to the impurity compound is too small, so that the sufficient effect is not obtained.

On the other hand, when the acetic acid content is too large, the amount of acetic acid adsorbed to the impurity compound increases so that steric hindrance occurs, and the dissolution rate of the impurity compound to the inorganic acid decreases, so that the effect is reduced.

Hence, the acetic acid content in the pre-treatment liquid is not less than 1 mass ppm, preferably not less than 3 mass ppm, and more preferably not less than 5 mass ppm.

On the other hand, the acetic acid content in the pre-treatment liquid is not more than 3000 mass ppm, preferably not more than 2500 mass ppm, and more preferably not more than 2000 mass ppm.

The quantitative determination of the acetic acid in the pre-treatment liquid is performed using ion chromatography.

The ion chromatography is performed under the following conditions.
* Column: two columns, i.e., Shodex RSpak KC-G8B (inner diameter: 8.0 mm, length: 50 mm) and Shodex RSpak KC-811 (inner diameter: 8.0 mm, length: 300 mm) are joined to each other
* Column temperature: 50°C
* Mobile phase: 3 mmol/L perchloric acid
* Reaction solution: Shodex ST3-R (diluted by 10 times)
* Flow rate: mobile phase 1.0 mL/min, reaction solution 0.7 mL/min

Measurement wavelength: 430 nm
Injection volume: 20 µL

### <<Solvent>>

Water is preferred as a solvent of the pre-treatment liquid.

### <<Preparation method>>

An example of a method for preparing the pre-treatment liquid is a method for preparing the pre-treatment liquid by weighing and mixing an inorganic acid and acetic acid which are reagents or industrial chemicals with known concentrations, and diluting the mixture with water so as to obtain a desired content.

### <Insulating coating treatment liquid>

Next, the insulating coating treatment liquid is described.

### «Salt»

The insulating coating treatment liquid contains at least one salt selected from the group consisting of phosphate, borate, and silicate. Thus, the resulting insulating coating is excellent in adhesion to the forsterite coating.

The phosphate is preferably a phosphate containing at least one metal element selected from the group consisting of Mg, Ca, Ba, Sr, Zn, Al, and Mn.

The phosphates may be used singly or in combination of two or more. By using two or more phosphates in combination, the physical property value of the insulating coating can be precisely controlled.

The phosphate is preferably a primary phosphate (biphosphate) for the reason of ease of availability.

Examples of the borate include borax (Na₂B₄O₅(OH)₄·8H₂O) and sodium polyborate.

Examples of the silicate include sodium silicate (Na₃SiO₃) and lithium silicate.

As a salt, borosilicate, borphosphate, silicophosphate, aluminosilicate or the like may be used.

### <<Colloidal silica>>

The insulating coating treatment liquid preferably further contains colloidal silica.

The content of the colloidal silica is preferably 20 parts by mass or more and more preferably 50 parts by mass or more in terms of SiO₂ solid content with respect to 100 parts by mass of the salt. When the content of the colloidal silica is in this range, an effect of reducing a thermal expansion coefficient of the insulating coating is increased, and the tension applied to the steel sheet is further increased.

Meanwhile, the content of the colloidal silica is preferably 120 parts by mass or less and more preferably 100 parts by mass or less in terms of SiO₂ solid content with respect to 100 parts by mass of the salt because this leads to more excellent adhesion between the insulating coating and the forsterite coating.

### <<Chromium compound>>

The insulating coating treatment liquid is preferably so-called chromium-free, i.e., does not contain a chromium compound such as chromic anhydride (chromium trioxide), chromate, and dichromate.

Specifically, the chromium compound content is preferably 1.0 part by mass or less, more preferably 0.10 parts by mass or less, and further preferably 0.01 parts by mass or less in terms of chromium element (Cr) with respect to 100 parts by mass of the salt.

### <<Metal compound>>

The insulating coating treatment liquid preferably contains a metal compound (a compound containing a metal element).

The metal compound content is preferably not less than 5.0 parts by mass and more preferably not less than 10 parts by mass in terms of metal element with respect to 100 parts by mass of the salt. As a result, the resulting insulating coating has good moisture absorption resistance, corrosion resistance, or another properties, and also applies higher tension to the steel sheet. When the insulating coating treatment liquid is chromium-free, these properties may be insufficient, so the metal compound as above is more useful.

On the other hand, the metal compound content is preferably not more than 60 parts by mass and more preferably not more than 40 parts by mass in terms of metal element with respect to 100 parts by mass of the salt. When the metal compound content is in this range, the insulating coating treatment liquid can be kept at a low viscosity, so an insulating coating having a uniform film thickness is easily obtained.

The metal element contained in the metal compound is preferably at least one selected from the group consisting of Ti, Zr, Hf, V, Mg, Zn, and Nb because the moisture absorption resistance of the resulting insulating coating is more excellent.

The metal compound is a compound such as an oxide or a nitride containing these metal elements, and the form thereof is, for example, a particle.

### <<Solvent>>

Water is preferred as a solvent of the insulating coating treatment liquid.

### <Electrical steel sheet having forsterite coating>

The electrical steel sheet having a forsterite coating is not particularly limited as long as it includes a steel sheet and a forsterite coating (a coating containing forsterite) disposed on the surface of the steel sheet, and one example thereof is a grain oriented electrical steel sheet.

### <<Component composition of steel>>

First, a preferred component composition of steel will be described. Hereinafter, the unit "%" of the content of each element means "mass%" unless otherwise specified.

### (C: 0.0010 to 0.10%)

C is useful for generating crystal grains of Goss orientation. The C content is preferably 0.0010% or more for effectively exhibiting this action.

On the other hand, when the C content is too large, poor decarburization may occur even by decarburization annealing. Therefore, the C content is preferably 0.10% or less.

### (Si: 1.0 to 5.0%)

Si increases electrical resistance to reduce iron loss, and stabilizes the BCC structure of iron to enable a heat treatment at a high temperature. Therefore, the Si content is preferably 1.0% or more and more preferably 2.0% or more.

On the other hand, when the Si content is too large, it is difficult to perform cold rolling. Therefore, the Si content is preferably 5.0% or less.

### (Mn: 0.010 to 1.0%)

Mn effectively contributes to the improvement of the hot shortness of the steel. Further, when S or Se is mixed, Mn forms a precipitate of MnS, MnSe, or the like, and functions as an inhibitor of crystal grain growth. Therefore, the Mn content is preferably 0.010% or more.

On the other hand, when the Mn content is too large, the particle size of the precipitate of MnSe or the like may become coarse, and the function as an inhibitor may be lost. Therefore, the Mn content is preferably 1.0% or less.

### (sol.Al: 0.0030 to 0.050%)

Al forms AlN in the steel, becomes a second dispersion phase, and functions as an inhibitor. Therefore, the Al content is preferably 0.0030% or more as sol.Al.

On the other hand, when the Al content is too large, AlN may be coarsely precipitated, and the function as an inhibitor may be lost. Therefore, the Al content is preferably 0.050% or less as sol.Al.

### (N: 0.0010 to 0.020%)

N forms AlN in the presence of Al. Therefore, the N content is preferably 0.0010% or more.

On the other hand, when the N content is too large, blistering or the like may occur during slab heating. Therefore, the N content is preferably 0.020% or less.

### (At least one of S or Se: 0.0010 to 0.050%)

S and Se each combine with Mn or Cu to form MnSe, MnS, Cu₂-xSe, or Cu₂-xS, become a second dispersion phase in the steel, and function as an inhibitor. Therefore, the total content of at least one of S or Se is preferably 0.0010% or more.

On the other hand, when the content of S and Se is too large, not only dissolution during slab heating is incomplete, but also defects on the product surface may occur. Therefore, the total content of at least one of S or Se is preferably 0.050% or less.

### (Other elements)

The component composition described above may further include at least one element (referred to as "element a" for convenience) selected from the group consisting of Cu: 0.20% or less, Ni: 0.50% or less, Cr: 0.50% or less, Sb: 0.10% or less, Sn: 0.50% or less, Mo: 0.50% or less, and Bi: 0.10% or less.

These elements a are likely to segregate at crystal grain boundaries, and function as auxiliary inhibitors, and thus can further improve magnetism. However, when the content of the element a is too large, failure of secondary recrystallization may easily occur. Therefore, the content of the element a is preferably in the above range.

From the viewpoint of obtaining the effect of addition of the element a, the content of each of Cu, Ni, Cr, Sb, Sn, and Mo is preferably 0.010% or more, and the content of Bi is preferably 0.0010% or more.

The component composition described above may further include at least one element (referred to as "element b" for convenience) selected from the group consisting of B: 0.010% or less, Ge: 0.10% or less, As: 0.10% or less, P: 0.10% or less, Te: 0.10% or less, Nb: 0.10% or less, Ti: 0.10% or less, and V: 0.10% or less.

With the element b, the force of suppressing the crystal grain growth is further enhanced, and a higher magnetic flux density is stably obtained. From the viewpoint of obtaining the effect of addition of the element b, the content of each of B and Ge is preferably 0.0010% or more, and each of the contents of As, P, Te, Nb, Ti, and V is preferably 0.0050% or more.

### (Balance)

The balance of the component composition described above consists of Fe and inevitable impurities.

### <<Manufacturing method>>

Next, an example of a method for manufacturing an electrical steel sheet having a forsterite coating will be described.

First, steel having the component composition described above is smelted by a conventionally known refining process, and a steel slab is obtained using a continuous casting method or an ingot making-blooming method.

Next, the obtained steel slab is hot-rolled to form a hot-rolled sheet, and the hot-rolled sheet is optionally subjected to hot band annealing. Thereafter, cold rolling is performed once, or twice or more with intermediate annealing performed therebetween to obtain a cold-rolled sheet having a final sheet thickness. Then, the obtained cold-rolled sheet is subjected to primary recrystallization annealing and decarburization annealing, an annealing separator containing MgO is then applied, and thereafter finishing annealing is performed.

In this way, an electrical steel sheet having a forsterite-containing coating (forsterite coating) formed on a surface thereof is obtained.

### <Method for manufacturing electrical steel sheet provided with insulating coating>

Next described is the method for manufacturing an electrical steel sheet provided with an insulation coating.

### <<Pre-treatment>>

First, the electrical steel sheet having a forsterite coating is subjected to a pre-treatment using the pre-treatment liquid. In other words, the pre-treatment liquid is brought into contact with the forsterite coating.

The method for the pre-treatment is not particularly limited as long as the pre-treatment liquid can be brought into contact with the forsterite coating. Examples thereof include a method in which an electrical steel sheet having a forsterite coating is immersed in a bath of the pre-treatment liquid. At this time, the following pre-treatment conditions (pre-treatment temperature and pre-treatment time) are preferably satisfied.

### (Pre-treatment temperature)

In order to sufficiently obtain the effect of the pre-treatment, the pre-treatment temperature (temperature of the pre-treatment liquid) is preferably 30°C or higher and more preferably 40°C or higher.

On the other hand, when the pre-treatment temperature is too high, the forsterite coating may be damaged, and the adhesion may deteriorate. In addition, a countermeasure against acid fumes may be required, and in this case, it is uneconomical.

Therefore, the pre-treatment temperature is preferably 95°C or lower and more preferably 90°C or lower.

### (Pre-treatment time)

In order to sufficiently obtain the effect of the pre-treatment, the pre-treatment time (contact time between the pre-treatment liquid and the forsterite coating) is preferably 1.0 second or longer and more preferably 2.0 seconds or longer.

On the other hand, when the pre-treatment time is too long, a lengthy device may be needed for the pre-treatment. In this case, as in the case where a countermeasure against acid fume is required, it is uneconomical. In addition, when the pre-treatment time is too long, the forsterite coating may be damaged, and the adhesion may deteriorate.

Therefore, the pre-treatment time is preferably 40 seconds or shorter and more preferably 30 seconds or shorter.

The forsterite coating after being brought into contact with the pre-treatment liquid is preferably washed with water.

While it is not essential to subsequently dry the forsterite coating before applying the insulating coating treatment liquid, it is preferable to dry the forsterite coating from the viewpoint of easily controlling the film thickness of the insulating coating.

### <<Coating and baking of insulating coating treatment liquid>>

Next, the insulating coating treatment liquid is applied to the forsterite coating after being brought into contact with the pre-treatment liquid, dried as necessary, and then baked. Instead of baking, flattening annealing also serving as baking may be performed.

In this way, an insulating coating is formed on the forsterite coating. That is, an electrical steel sheet provided with an insulating coating is obtained.

### EXAMPLES

Hereinafter, the present invention will be specifically described with reference to examples. However, the invention is not limited to the examples described below.

### <Manufacture of electrical steel sheet provided with insulating coating>

An electrical steel sheet provided with an insulating coating was produced as follows.

### <<Preparation of electrical steel sheet having forsterite coating>>

First, a grain oriented electrical steel sheet having undergone finishing annealing and having a sheet thickness of 0.20 mm was prepared. Since the electrical steel sheet had undergone finishing annealing, a forsterite coating was formed on the surface.

Meanwhile, when an S amount (i.e., the amount of sulfur contained in either the forsterite coating or the steel sheet) of the prepared grain oriented electrical steel sheet was determined by the method to be described later, the result was 50 mass ppm.

Similarly, when an Se amount (i.e., the amount of selenium contained in either the forsterite coating or the steel sheet) of the prepared grain oriented electrical steel sheet was determined by the method to be described later, the result was 100 mass ppm.

Further, the forsterite coating was peeled off from the prepared grain oriented electrical steel sheet by the method to be described later, so that the steel sheet was in the state of being only a steel sheet. When the S amount and the Se amount of the steel sheet in this state were determined in the same manner as described above, both of them were less than the quantitation limit.

Therefore, it is revealed that in the prepared grain oriented electrical steel sheet, the impurity elements S and Se are mostly incorporated in the forsterite coating.

### <<Preparation of insulating coating treatment liquid>>

Insulating coating treatment liquids A to V each having the component composition shown in Table 1 below were prepared.

As the phosphate, a primary phosphate was used. In Table 1 below, primary magnesium phosphate is described as "Mg phosphate". The same applies to other primary phosphates.

As the borate, borax (Na₂B₄O₅(OH)₄·8H₂O) was used.

As the silicate, sodium silicate (Na₃SiO₃) was used.

As the colloidal silica, SNOWTEX 30 manufactured by Nissan Chemical Corporation was used.

As the metal compound (compound containing a metal element), in addition to water-soluble CrO₃, TiO₂, ZrO₂, HfO₂, Nb₂O₃, VN, MgO, or ZnO was used. In Table 1 below, the contents expressed in terms of the metal element (in Table 1 below, simply referred to as "content") were described.

The particle sizes of the metal compounds were all in a range of 0.1 to 0.8 um. The particle size was measured using a laser diffraction particle size distribution measuring apparatus SALD-3100 manufactured by SHIMADZU CORPORATION. The particle size is an average particle size, and refers to a particle diameter of 50% on a volume basis, that is, a median size.

### <<Preparation of pre-treatment liquid>>

Pre-treatment liquids of Nos. 1 to 51 shown in Table 2 were prepared.

Specifically, to pure water of the amount shown in Table 2 below, hydrochloric acid (concentration: 35 mass%), sulfuric acid (concentration: 97 mass%), phosphoric acid (concentration: 85 mass%) and acetic acid (concentration: 99.7 mass%), which were liquids of guaranteed reagents, were added in amounts shown in Table 2 below to obtain a pre-treatment liquid.

The inorganic acid content and the acetic acid content of the obtained pre-treatment liquid are shown in Table 2 below.

### <<Pre-treatment>>

The prepared grain oriented electrical steel sheet having undergone finishing annealing was washed with water to remove an unreacted annealing separator, immersed in a bath of the pre-treatment liquid under pre-treatment conditions (pre-treatment temperature and pre-treatment time) shown in Table 2 below, and then washed with water and dried. In this way, the pre-treatment was performed.

### <<Coating and baking of insulating coating treatment liquid>>

After the pre-treatment was performed, the insulating coating treatment liquid shown in Table 2 below was applied, by using a roll coater, to the surface (that is, the forsterite coating) of the grain oriented electrical steel sheet having undergone finishing annealing such that the total coating weight of both surfaces of the grain oriented electrical steel sheet after application and baking was 12.0 g/m², followed by baking, thus forming an insulating coating. The baking conditions were 840°C for 20 seconds in an atmosphere of N₂: 100 vol%. Thus, an electrical steel sheet provided with an insulating coating was obtained.

A magnetic flux density B₈ (magnetic flux density at a magnetizing force of 800 A/m) of the obtained electrical steel sheet provided with an insulating coating was 1.920 T.

### <Evaluation>

The obtained electrical steel sheets provided with insulating coatings were evaluated by the following method. The evaluation results are shown in Table 2 below.

### <<S amount>>

### (Before Peeling)

For the obtained electrical steel sheet provided with an insulating coating, the S amount (unit: mass ppm) was determined according to the combustion-infrared absorption method described in JIS G 1215-4.

The S amount thus determined means the amount of sulfur (S) contained in any one of the insulating coating, the forsterite coating, and the steel sheet.

### (After Peeling)

The obtained electrical steel sheet provided with an insulating coating was immersed in a mixed solution of hydrochloric acid and hydrofluoric acid, whereby the insulating coating and the forsterite coating were peeled off to have only the steel sheet. The S amount (unit: mass ppm) of the steel sheet in this state was determined in the same manner as described above.

### <<Se amount>>

### (Before Peeling)

An Se amount (unit: mass ppm) of the obtained electrical steel sheet provided with an insulating coating was determined.

The Se amount was determined according to the atomic absorption spectrometry described in JIS G 1257-20 or the 2,3-diaminonaphthalene extraction absorption spectrophotometry described in JIS G 1233, depending on the size.

The determined Se amount means the amount of selenium (Se) contained in any one of the insulating coating, the forsterite coating, and the steel sheet.

### (After Peeling)

The obtained electrical steel sheet provided with an insulating coating was immersed in a mixed solution of hydrochloric acid and hydrofluoric acid, whereby the insulating coating and the forsterite coating were peeled off to have only the steel sheet. The Se amount (unit: mass ppm) of the steel sheet in this state was determined in the same manner as described above.

When the S amount and the Se amount were less than the quantitation limit, "ND" is put in the corresponding column in Table 2 below.

### <<Adhesion>>

The obtained electrical steel sheet provided with an insulating coating was subjected to stress relief annealing in a nitrogen atmosphere at 820°C for 3 hours.

The electrical steel sheet provided with an insulating coating having undergone stress relief annealing was wound around round bars having diameters different on a 5-millimeter basis, i.e., diameter of 5 mm, 10 mm, ... to determine the minimum diameter with which the forsterite coating did not peel off. When the diameter was not more than 30 mm, the adhesion of the forsterite coating to the steel sheet was evaluated to be excellent.

### <<Iron loss>>

A test piece having a width of 30 mm × a length of 280 mm was cut out from the obtained electrical steel sheet provided with an insulating coating. An iron loss (W_{17/50}) (loss per mass at an amplitude of magnetic flux density of 1.7 T and a frequency of 50 Hz) was measured using the cut test piece in accordance with the method described in JIS C 2550. The iron loss (W_{17/50}) is preferably 0.800 W/kg or less.

### [Table 1]

**Table 1**

| Insulating coating treatment liquid No. | Salt (in terms of solid content) [g] | | | | | | | | | Colloidal silica (in terms of SiO₂ solid content) [g] | Metal compound | |
|---|---|---|---|---|---|---|---|---|---|---|---|---|
| | Phosphate | | | | | | | Borate salt | Silicate | | | |
| | Mg phosphate | Ca phosphate | Ba phosphate | Sr phosphate | Zn phosphate | Al phosphate | Mn phosphate | | | | Type | Content [g] |
| A | 100 | | | | | | | | | 50 | CrO₃ | 20 |
| B | 100 | | | | | | | | | 80 | CrO₃ | 25 |
| C | 100 | | | | | | | | | 100 | CrO₃ | 30 |
| D | 100 | | | | | | | | | 20 | TiO₂ | 5 |
| E | | | | | | 100 | | | | 60 | TiO₂ | 10 |
| F | 70 | | | | | 30 | | | | 80 | ZrO₂ | 40 |
| G | | | | | | 100 | | | | 120 | ZrO₂ | 10 |
| H | | 100 | | | | | | | | 100 | MgO | 10 |
| I | | | 100 | | | | | | | 50 | ZrO₂ | 40 |
| J | | | | 100 | | | | | | 50 | Nb₂O₅ | 10 |
| K | | | | | 100 | | | | | 20 | ZnO | 40 |
| L | | | | | | 100 | | | | 20 | ZnO | 60 |
| M | | | | | | | 100 | | | 100 | VN | 10 |
| N | 80 | 20 | | | | | | | | 80 | ZrO₂ | 20 |
| O | 50 | | | | 50 | | | | | 120 | TiO₂ | 20 |
| P | | | 50 | 50 | | | | | | 100 | ZrO₂ | 20 |
| Q | 60 | | | | | 40 | | | | 100 | HfO2 | 20 |
| R | | | | | | | | 100 | | 80 | ZrO₂ | 30 |
| S | | | | | | | | | 100 | 80 | ZrO₂ | 30 |
| T | | | | | | 80 | | 20 | | 50 | ZrO₂ | 30 |
| U | | | | | | 80 | | | 20 | 80 | ZrO₂ | 30 |
| V | | | | | | 80 | | 10 | 10 | 100 | ZrO₂ | 30 |

### [Table 2]

**Table 2 (1/3)**

| No. | Insulating coating treatment liquid No. | Preparation of pre-treatment liquid | | | | | Pre-treatment liquid | | Pre-treatment condition | | S amount [mass ppm] | | Se amount [mass ppm] | | Adhesion [mm] | Iron loss [W/kg] | Remarks |
|---|---|---|---|---|---|---|---|---|---|---|---|---|---|---|---|---|---|
| | | Inorganic acid | | | Acetic acid [mL] | Pure water [mL] | Inorganic acid [mass%] | Acetic acid [mass ppm] | Pre-treatment temperature [°C] | Pre-treatment time [sec] | | | | | | | |
| | | Hydrochloric acid [mL] | Sulfuric acid [mL] | Phosphoric acid [mL] | | | | | | | Before peeling | After peeling | Before peeling | After peeling | | | |
| 1 | A | 0 | 0 | 5000 | 0 | 100000 | 670 | 0 | 50 | 2 | 40 | 20 | 90 | 50 | 25 | 0.862 | Comparative Example |
| 2 | A | 0 | 0 | 5000 | 0 | 100000 | 670 | 0 | 50 | 60 | 20 | 5 | 45 | 8 | 60 | 0.791 | Comparative Example |
| 3 | A | 0 | 0 | 5000 | 0 | 100000 | 670 | 0 | 100 | 5 | 8 | ND | 15 | ND | 80 | 0.820 | Comparative Example |
| 4 | A | 0 | 0 | 5000 | 0.1 | 100000 | 6.70 | 1 | 50 | 2 | 20 | 5 | 40 | 6 | 25 | 0.789 | Inventive Example |
| 5 | A | 0 | 0 | 5000 | 1 | 100000 | 670 | 10 | 50 | 2 | 10 | ND | 30 | 3 | 25 | 0.769 | Inventive Example |
| 6 | A | 0 | 0 | 5000 | 5 | 100000 | 670 | 49 | 50 | 2 | 10 | ND | 30 | 3 | 25 | 0.771 | Inventive Example |
| 7 | A | 0 | 0 | 5000 | 50 | 100000 | 670 | 488 | 50 | 2 | 10 | ND | 20 | ND | 20 | 0.776 | Inventive Example |
| 8 | A | 0 | 0 | 5000 | 100 | 100000 | 6.69 | 976 | 50 | 5 | 10 | ND | 15 | ND | 20 | 0.765 | Inventive Example |
| 9 | A | 0 | 0 | 5000 | 308 | 100000 | 6.68 | 2999 | 50 | 5 | 10 | ND | 10 | ND | 25 | 0.769 | Inventive Example |
| 10 | A | 0 | 0 | 5000 | 400 | 100000 | 6.68 | 3892 | 50 | 5 | 30 | 18 | 60 | 45 | 25 | 0.860 | Comparative Example |
| 11 | E | 0 | 6000 | 0 | 0 | 100000 | 9.67 | 0 | 40 | 5 | 45 | 30 | 95 | 60 | 20 | 0.870 | Comparative Example |
| 12 | B | 0 | 6000 | 0 | 0.53 | 100000 | 9.67 | 5 | 40 | 5 | 25 | 8 | 45 | 9 | 20 | 0.756 | Inventive Example |
| 13 | N | 0 | 6000 | 0 | 5 | 100000 | 9.67 | 47 | 60 | 5 | 15 | 5 | 40 | 6 | 25 | 0.769 | Inventive Example |
| 14 | D | 0 | 6000 | 0 | 100 | 100000 | 966 | 945 | 80 | 5 | 15 | 5 | 35 | 5 | 25 | 0.770 | Inventive Example |
| 15 | G | 0 | 6000 | 0 | 200 | 100000 | 965 | 1888 | 80 | 5 | 15 | 5 | 35 | 5 | 25 | 0.767 | Inventive Example |
| 16 | A | 0 | 6000 | 0 | 300 | 100000 | 965 | 2829 | 60 | 10 | 20 | 7 | 40 | 7 | 25 | 0.788 | Comparative Example |
| 17 | B | 0 | 6000 | 0 | 500 | 100000 | 963 | 4706 | 30 | 10 | 40 | 25 | 90 | 45 | 25 | 0.853 | Comparative Example |
| 18 | B | 5000 | 0 | 0 | 0 | 100000 | 2.02 | 0 | 30 | 10 | 50 | 30 | 95 | 55 | 25 | 0.868 | Comparative Example |
| 19 | B | 5000 | 0 | 0 | 0.1 | 100000 | 2.02 | 1 | 30 | 30 | 30 | 15 | 50 | 10 | 20 | 0.762 | Inventive Example |
| 20 | B | 5000 | 0 | 0 | 10 | 100000 | 2.02 | 103 | 30 | 30 | 25 | 8 | 45 | 10 | 20 | 0.767 | Inventive Example |
| 21 | B | 5000 | 0 | 0 | 100 | 100000 | 2.02 | 1025 | 30 | 20 | 20 | 6 | 45 | 8 | 20 | 0.767 | Inventive Example |
| 22 | B | 2500 | 0 | 2500 | 5 | 100000 | 4.42 | 50 | 80 | 20 | 10 | ND | 25 | ND | 25 | 0.763 | Inventive Example |
| 23 | B | 2500 | 2500 | 0 | 5 | 100000 | 5.21 | 50 | 80 | 10 | 15 | 6 | 25 | | 25 | 0.769 | Inventive Example |
| 24 | B | 2000 | 2000 | 2000 | 5 | 100000 | 6.78 | 49 | 60 | 20 | 15 | 6 | 35 | 5 | 25 | 0.762 | Inventive Example |
| 25 | A | 1000 | 1000 | 3000 | 5 | 100000 | 611 | 49 | 80 | 5 | 15 | 5 | 35 | 5 | 25 | 0.772 | Inventive Example |
| 26 | H | 0 | 0 | 140 | 10 | 100000 | 0.20 | 104 | 80 | 10 | 15 | 5 | 30 | 4 | 25 | 0.756 | Inventive Example |
| 27 | J | 0 | 150 | 0 | 10 | 100000 | 0.27 | 104 | 80 | 10 | 15 | 6 | 30 | 4 | 25 | 0.770 | Inventive Example |
| 28 | M | 1000 | 0 | 0 | 20 | 100000 | 0.41 | 208 | 70 | 5 | 25 | 8 | 40 | 7 | 25 | 0.758 | Inventive Example |
| 29 | O | 0 | 0 | 1500 | 20 | 100000 | 211 | 205 | 70 | 5 | 20 | 7 | 35 | 5 | 25 | 0.761 | Inventive Example |
| 30 | A | 0 | 0 | 1500 | 40 | 100000 | 2.11 | 410 | 50 | 15 | 5 | ND | 15 | ND | 20 | 0.779 | Inventive Example |
| 31 | I | 2000 | 2000 | 0 | 40 | 100000 | 421 | 401 | 50 | 15 | 5 | ND | 15 | ND | 20 | 0.760 | Inventive Example |
| 32 | P | 3000 | 3000 | 0 | 50 | 100000 | 618 | 491 | 50 | 15 | 5 | ND | 15 | ND | 20 | 0.770 | Inventive Example |
| 33 | C | 0 | 0 | 10000 | 50 | 100000 | 12.55 | 457 | 50 | 15 | 5 | ND | 15 | ND | 20 | 0.762 | Inventive Example |
| 34 | D | 0 | 10000 | 10000 | 250 | 100000 | 24.32 | 1976 | 50 | 15 | ND | ND | 8 | ND | 20 | 0.764 | Inventive Example |
| 35 | E | 17000 | 20000 | 0 | 250 | 100000 | 29.88 | 1830 | 50 | 15 | ND | ND | 8 | ND | 20 | 0.772 | Inventive Example |
| 36 | F | 17000 | 0 | 20000 | 200 | 100000 | 26.30 | 1540 | 50 | 15 | 5 | ND | 14 | ND | 20 | 0.755 | Inventive Example |
| 37 | M | 0 | 0 | 15000 | 100 | 100000 | 17.71 | 861 | 60 | 30 | 5 | ND | 15 | ND | 25 | 0.767 | Inventive Example |
| 38 | N | 0 | 0 | 15000 | 10 | 100000 | 17.73 | 86 | 95 | 30 | ND | ND | ND | ND | 30 | 0.766 | Inventive Example |
| 39 | O | 0 | 15000 | 0 | 5 | 100000 | 21.12 | 41 | 90 | 30 | ND | ND | ND | ND | 25 | 0.763 | Inventive Example |
| 40 | B | 0 | 15000 | 0 | 0 | 100000 | 21.12 | 0 | 70 | 2 | 30 | 19 | 60 | 46 | 25 | 0.866 | Comparative Example |
| 41 | K | 50000 | 0 | 0 | 1 | 100000 | 17.12 | 9 | 70 | 2 | 10 | ND | 20 | ND | 30 | 0.768 | Inventive Example |
| 42 | L | 0 | 10000 | 0 | 1 | 100000 | 15.14 | 9 | 70 | 5 | 10 | ND | 20 | ND | 25 | 0.774 | Inventive Example |
| 43 | G | 0 | 0 | 15000 | 3 | 100000 | 17.73 | 26 | 70 | 5 | 8 | ND | 20 | ND | 20 | 0.765 | Inventive Example |
| 44 | R | 0 | 0 | 15000 | 3 | 100000 | 17.73 | 26 | 70 | 5 | 8 | ND | 20 | ND | 20 | 0.765 | Inventive Example |
| 45 | S | 0 | 0 | 15000 | 3 | 100000 | 17.73 | 26 | 70 | 5 | 8 | ND | 20 | ND | 20 | 0.765 | Inventive Example |
| 46 | T | 0 | 5000 | 5000 | 9 | 100000 | 13.87 | 81 | 50 | 15 | 5 | ND | 15 | ND | 20 | 0.773 | Inventive Example |
| 47 | T | 0 | 0 | 10000 | 30 | 100000 | 12.56 | 275 | 50 | 15 | 5 | ND | 15 | ND | 20 | 0.766 | Inventive Example |
| 48 | U | 0 | 5000 | 5000 | 100 | 100000 | 13.86 | 901 | 50 | 30 | ND | ND | 8 | ND | 20 | 0.772 | Inventive Example |
| 49 | U | 0 | 0 | 10000 | 5 | 100000 | 12.56 | 46 | 50 | 30 | ND | ND | 10 | ND | 20 | 0.761 | Inventive Example |
| 50 | V | 1000 | 0 | 0 | 5 | 100000 | 0.41 | 52 | 50 | 30 | 20 | 8 | 35 | 6 | 20 | 0.763 | Inventive Example |
| 51 | V | 0 | 0 | 10000 | 10 | 100000 | 12.56 | 92 | 60 | 30 | ND | ND | 10 | ND | 25 | 0.758 | Inventive Example |

### <Summary of Evaluation Results>

As shown in Table 2 above, the electrical steel sheet provided with an insulating coating of each of Nos. 4 to 9, 12 to 16, 19 to 39 and 41 to 51 (inventive examples) had excellent adhesion of the forsterite coating and low iron loss.

In contrast, in the electrical steel sheet provided with an insulating coating of each of Nos. 1 to 3, 10 to 11, 17 to 18 and 40 (comparative examples), at least one of the adhesion of the forsterite coating or the reduction in iron loss was insufficient.

### <<Comparison of Nos. 1 to 10>>

Here, of Nos. 1 to 51, as typical examples, Nos. 1 to 10 in which the insulating coating treatment liquid A was used are compared.

First, attention should be drawn to No. 1 using a pre-treatment liquid containing no acetic acid.

Since No. 1 had a large S amount (before peeling) and a large Se amount (before peeling), it is revealed that the impurity elements (S and Se) in the forsterite coating were not sufficiently removed by the pre-treatment using the pre-treatment liquid.

In addition, since No. 1 also had a large S amount (after peeling) and a large Se amount (after peeling), it is revealed that during the baking for forming an insulating coating, the impurity elements (S and Se) re-entered from the forsterite coating into the steel sheet.

In No. 2, a pre-treatment liquid containing no acetic acid was used as in the case of No. 1, but the pre-treatment time was longer than No. 1.

Since No. 2 had a lower S amount and a lower Se amount than those in No. 1, it is revealed that S and Se in the forsterite coating were removed due to an increase in the pre-treatment time.

However, in No. 2, the adhesion and the reduction in iron loss were insufficient. This is presumably because the forsterite coating was damaged due to an increase in the pre-treatment time.

No. 3 is an example in which a pre-treatment liquid containing no acetic acid was used as in No. 1 but the pre-treatment temperature was higher than that in No. 1.

Since No. 3 had a lower S amount and a lower Se amount than those in No. 1, it is revealed that S and Se in the forsterite coating were removed due to an increase in the pre-treatment temperature.

However, in No. 3, the adhesion and the reduction in iron loss were insufficient. This is presumably because the forsterite coating was damaged due to an increase in the pre-treatment temperature.

In contrast, attention should be drawn to Nos. 4 to 10 using a pre-treatment liquid containing acetic acid.

In Nos. 4 to 9, even under the same pre-treatment conditions (pre-treatment temperature and pre-treatment time) as those in No. 1, the S amount and the Se amount were lower than those in No. 1, so it is revealed that S and Se in the forsterite coating were removed.

In addition, in Nos. 4 to 9, the adhesion of the forsterite coating was good, and the iron loss was low, so it is revealed that the damage of the forsterite coating due to the pre-treatment was suppressed.

Meanwhile, in No. 10 in which the pre-treatment liquid containing a large amount of acetic acid was used, the S amount and the Se amount were not sufficiently reduced. This is presumably because, as described above, the amount of acetic acid adsorbed to S and Se increased, steric hindrance occurred, and the dissolution rate was decreased.

In No. 10 as above, the forsterite coating was not damaged, and the adhesion was good, but the S and the Se re-entered from the forsterite coating into the steel sheet, so that the iron loss was not sufficiently reduced.

## Claims

1. A pre-treatment liquid used on an electrical steel sheet having a forsterite coating on a surface thereof before applying an insulating coating treatment liquid containing at least one salt selected from the group consisting of phosphate, borate, and silicate, the pre-treatment liquid comprising:
at least one inorganic acid selected from the group consisting of hydrochloric acid, sulfuric acid, and phosphoric acid; and
acetic acid,
wherein a content of the acetic acid is not less than 1 mass ppm and not more than 3000 mass ppm.

2. The pre-treatment liquid according to claim 1,
wherein a content of the at least one inorganic acid is not less than 0.20 mass% and not more than 30.00 mass%.

3. A method for manufacturing an electrical steel sheet provided with an insulating coating, the method comprising: subjecting an electrical steel sheet having a forsterite coating on a surface thereof to a pre-treatment using the pre-treatment liquid according to claim 1 or 2; and subsequently applying and baking an insulating coating treatment liquid containing at least one salt selected from the group consisting of phosphate, borate, and silicate to form an insulating coating.

4. The method for manufacturing an electrical steel sheet provided with an insulating coating according to claim 3, wherein the pre-treatment is a treatment of bringing the pre-treatment liquid into contact with the forsterite coating.

5. The method for manufacturing an electrical steel sheet provided with an insulating coating according to claim 4, wherein a temperature of the pre-treatment liquid is not lower than 30°C and not higher than 95°C, and
a contact time between the pre-treatment liquid and the forsterite coating is 1.0 second or longer and 40 seconds or shorter.

6. The method for manufacturing an electrical steel sheet provided with an insulating coating according to any one of claims 3 to 5, wherein a content of a chromium compound in the insulating coating treatment liquid is 1.0 part by mass or less in terms of chromium element with respect to 100 parts by mass of the salt.
